# EUROPÄISCHE PATENTANMELDUNG

(11) **EP 0 684 078 A1**
(43) Veröffentlichungstag der Anmeldung: **29.11.1995**
(21) Anmeldenummer: 95106405.4
(22) Anmeldetag: 28.04.1995
(51) Int. Cl.: B03B 5/48, B03B 5/28, B09C 1/02, B01D 21/00

(54) **Reinigungseinrichtung für Sand, mit einem Verteiler für Schwebstoffe**

(30) Priorität: 28.05.1994 DE 4418759
(71) Anmelder: ECOTECHNIEK BV, NL-3606 AZ Maarsen (NL)
(72) Erfinder: Pos, Jacobus, NL-7141 VE Groenlo (NL)
(74) Vertreter: Habbel, Hans-Georg, Dipl.-Ing.

(57) **Zusammenfassung**

Bei einer Reinigungseinrichtung (5) für Sand, mit einem Behälter (6), der einen Zulauf für eine Wasser/Sand-Suspension aufweist, sowie einen Reinwasser-Ablauf, sowie mit in dem Behälter (6) angeordneten Lamellen (7), die wellenartig konvexe und konkave Bereiche aufweisen, sowie mit einer Förderschnecke (12) im Behältertiefsten, schlägt die Erfindung einen Verteiler (15) für aus dem Behältertiefsten aufsteigende Schwebstoffe vor, wobei der Verteiler (15) eine Vielzahl von Durchlässen für die Schwebstoffe aufweist und zwischen der Förderschnecke (12) und den Lamellen (7) angeordnet ist.

## Beschreibung

Die Erfindung betrifft eine Reinigungseinrichtung nach dem Oberbegriff des Anspruchs 1.

Eine derartige Reinigungseinrichtung ist beispielsweise aus der DE 40 27 879 A1 bekannt.

Durch zunehmend stärkere Verschmutzungen der Böden einerseits und durch zunehmend höhere Anforderungen an die Reinheit aufbereiteter Sande andererseits liegt der Erfindung die Aufgabe zugrunde, eine gattungsgemäße Einrichtung dahingehend zu verbessern, daß die Abscheideleistung für Sinkstoffe trotz guter Abscheideleistung für Schwebstoffe optimiert wird.

Diese der Erfindung zugrundeliegende Aufgabe wird durch die Ausgestaltung einer Reinigungsvorrichtung gemäß den kennzeichnenden Merkmalen des Anspruchs 1.

Die Erfindung schlägt mit anderen Worten vor, einen Verteiler vorzusehen, der unterhalb der Lamellen angeordnet ist. Auf diese Weise werden aus dem Behältertiefsten aufsteigende Schwebstoffe, die eine vertikal nach oben gerichtete Strömung erzeugen, einerseits über die gesamte Fläche unterhalb der Lamellen gleichmäßig verteilt, und andererseits stellt der Verteiler einen Strömungswiderstand für diese Schwebstoffe dar, so daß deren Strömungsgeschwindigkeit verlangsamt wird.

Da im gesamten Reinigungsbehälter eine im wesentlichen horizontale Strömung vorliegt, die vom Zulauf zum Ablauf gerichtet ist, und da diese Strömung möglichst laminar und beruhigt ausgebildet sein soll, bewirkt die Beruhigung der zu dieser Hauptströmung vertikalen Strömung durch Schwebstoffe eine verbesserte Abscheideleistung für die Sinkstoffe.

Vorteilhaft kann die Größe der Durchlässe des Verteilers einstellbar sein, so daß die Wirkungsweise des Verteilers an die Umgebungsparameter angepaßt werden kann, beispielsweise an unterschiedliche Verschmutzungsgrade oder Verschmutzungsarten des Sandes oder an unterschiedliche Gasblasengrößen, wenn die Schwebstoffe an Gasblasen gebunden aufsteigen.

Auf einfache Weise kann eine derartig verstellbare Ausbildung des Verteilers durch eine Vielzahl von Streben erreicht werden, die in mehreren Ebenenen jeweils versetzt zueinander angeordnet sind und zueinander zustellbar sind, so daß insgesamt die Zwischenräume zwischen den Streben unterschiedlich groß ausgebildet werden können und dementsprechend unterschiedliche Strömungswiderstände für die Schwebstoffe darstellen.

Um zu verhindern, daß die Durchlässe des Verteilers mit der Zeit durch Sinkstoffe zugesetzt werden, können die Oberseiten der Streben vorteilhaft kuppenförmig oder dachförmig ausgebildet sein, so daß auf den gebogenen oder schrägen Flächen die Sinkstoffe sich nicht anlagern, sondern spätestens ab einer bestimmten Größe an der Oberseite der Streben entlanggleiten und zum Behältertiefsten sinken.

Weitere vorteilhafte Ausgestaltungen der Erfindung sind den Unteransprüchen entnehmbar.

Ein Ausführungsbeispiel der Erfindung wird anhand der Zeichnung im folgenden näher erläutert.

Dabei zeigt
Fig. 1 eine schematische Anordnung einer erfindungsgemäßen Reinigungseinrichtung,
Fig. 2 eine Seitenansicht auf das Zulaufende der Reinigungseinrichtung,
Fig. 3 eine stirnseitige Ansicht auf das Ablaufende der Einrichtung von Fig. 1,
Fig. 4 eine Draufsicht auf die Einrichtung gemäß Fig. 1 und
Fig. 5 einen Schnitt gemäß der Linie A - A in Fig. 4.

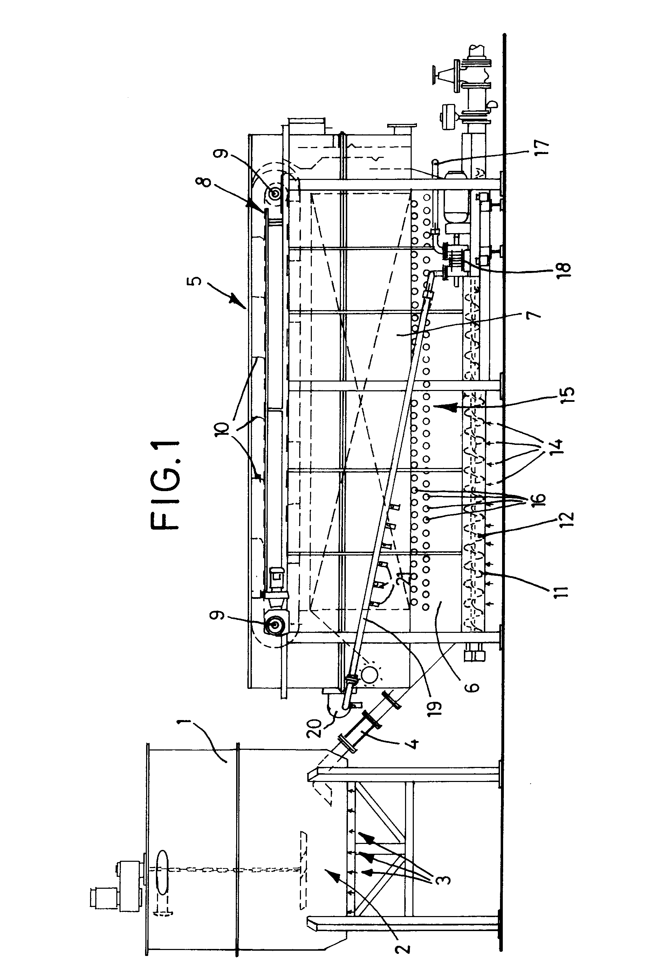

In Fig. 1 ist eine Anlage dargestellt, die zur Reinigung von Sand, beispielsweise aus Bauschutt dient. Der Sand wird zunächst einem Vorbehälter 1 zugeführt und dort in Wasser suspendiert. Eine Rührvorrichtung 2 dient dazu, den Sand in der Suspension zu halten und zu verwirbeln. Die Verwirbelung sowie der Austrag von flüchtigen Verunreinigungen kann durch das Einleiten von Gas, beispielsweise von Luft, unterstützt werden, die über schematisch angedeutete Belüftungsöffnungen 3 durch den Boden des Vorbehälters 1 in die Wasser/Sand-Suspension eingeleitet werden kann.

Luft-Wasser-Gemisch wird dem Vorbehälter 1 über eine Entnahmeleitung 4 entnommen und einer Reinigungseinrichtung 5 zugeführt, die erfindungsgemäß ausgebildet ist.

Die Entnahmeleitung 4 ist an den Schmutzwasser-Zulauf eines Behälters 6 angeschlossen, in dem senkrecht angeordnete Lamellen 7 mit horizontal verlaufenden Strömungskanälen, d. h. mit horizontal verlaufenden konvexen Bereichen und konkaven Bereichen angeordnet sind. Die Lamellen 7 erstrecken sich nahezu über die gesamte Distanz zwischen dem Schmutzwasserzulauf und dem Reinwasserablauf, wobei die Lamellen in Strömungsrichtung des Wassers verlaufen.

Durch die große Länge der Lamellen 7 wird bewirkt, daß abhängig von der Packungsdichte der Lamellen und der Strömungsgeschwindigkeit des Wassers spätestens im hinteren Bereich der Lamellen 7 eine laminare turbulenzfreie Strömung des Wassers erreicht wird, in der einerseits Schwebstoffe ungehindert aufsteigen können und andererseits Sinkstoffe auch geringen spezifischen Gewichts ungehindert absinken können. Durch die wellig ausgebildeten Lamellen 7 werden für absinkende Stoffe insgesamt eine Vielzahl von Absetzflächen geschaffen und auf diese Weise sehr kurze Absetzwege geschaffen, so daß auch bei langsamen Sinkgeschwindigkeiten im Verhältnis zur Strömungsgeschwindigkeit des Wassers ein Absinken und Absetzen auch kleinster Sinkstoffe auf den Lamellen unterstützt wird, wo sich diese Sinkstoffe mit anderen kleinsten Partikeln zusammenballen können und dann abschließend nach unten in das Behältertiefste absinken können.

Aufsteigende Verunreinigungen können in an sich bekannter Weise über eine Kratzeinrichtung 8 abgezogen werden, welche um zwei voneinander entfernte Drehachsen 9 umläuft und eine Vielzahl von Kratzleisten 10 zur Erfassung der aufschwimmenden Verunreinigungen aufweist.

In Abwandlung des dargestellten Ausführungsbeispiels können die Lamellen 7 auch aus mehreren in Strömungsrichtung des Wassers hintereinander angeordneten Lamellenpaketen ausgebildet sein. Dabei können die unterschiedlichen Lamellenpakete unterschiedlich schrägstehende Lamellen aufweisen oder Lamellen mit unterschiedlich verlaufenden konvexen und konkaven Bereichen. Auf diese Weise können in unterschiedlichen Strömungszonen des Behälters 6 die Lamellen optimal an die Absinkgeschwindigkeiten von Partikeln mit unterschiedlichen Korndurchmessern angepaßt werden und insgesamt eine möglichst hohe Sandabscheidung aus dem Schmutzwasser ermöglichen.

Absinkende Stoffe sammeln sich im Bereich des Behältertiefsten in einem Förderkanal 11, der sich über die gesamte Länge des Behälters 6 erstreckt und in welchem eine Förderschnecke 12 angeordnet ist. Die Förderschnecke 12 dient dazu, anfallende Sinkstoffe aus dem Behälter 6 abzufördern. Sie bewirkt weiterhin eine mechanische Durchwirbelung der Sinkstoffe. Auf diese Weise werden die Sinkstoffe einerseits durch das umgebende Wasser gewaschen, andererseits durch die Reibung untereinander und durch die Reibung mit Bauteilen des Behälters 6 gescheuert und gerieben, wodurch auf mechanische Weise anhaftende Verunreinigungen von den Sandkörnern entfernt werden.

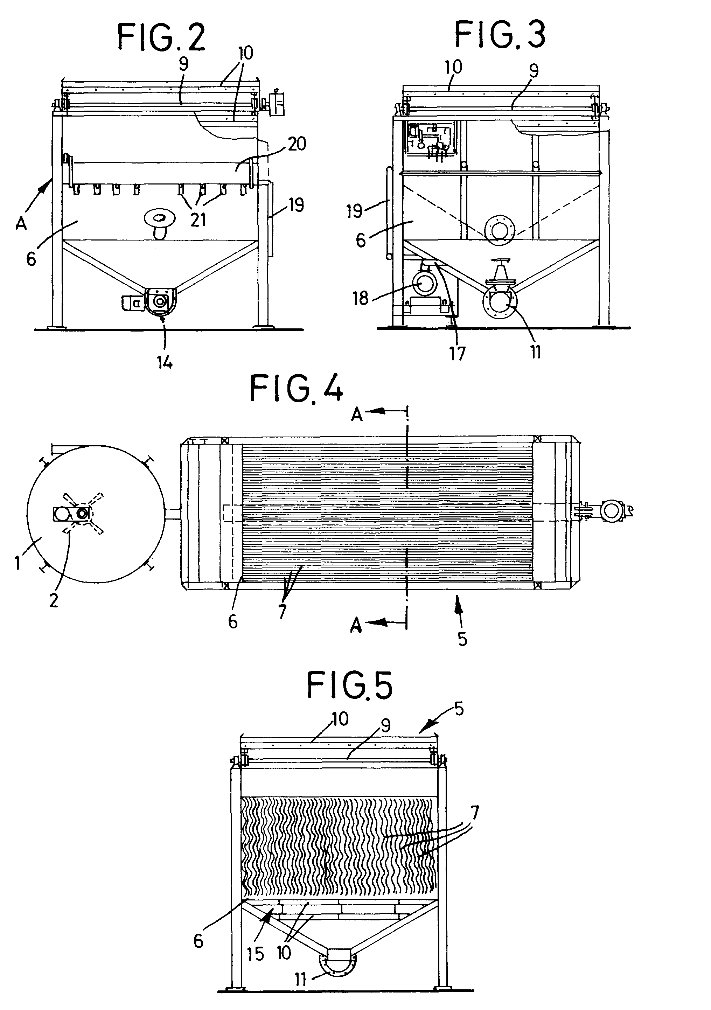

Im tiefsten Bereich des Förderkanals 11 sind in Fig. 1 sowie Fig. 2 schematisch angedeutete Belüftungsdüsen 14 erkennbar, durch die Luft oder ein anderes geeignetes Gas in den Förderkanal 11 eingeblasen werden kann. Das Gas kann dabei in Form von Mikrobläschen oder von gröberen Blasen eingedüst werden und bewirkt eine dritte Form der Behandlung der Sinkstoffe im Behältertiefsten: Die Gasbläschen nehmen die bereits abgelösten Verunreinigungen zwischen den Sandkörnern auf und transportieren sie nach oben, zwischen den Lamellen 7 hindurch, wo diese Verunreinigungen durch die Kratzeinrichtung 8 entfernt werden können.

Die Belüftungsdüsen 14 können vorteilhaft über der gesamten Länge des Förderkanals 11 vorgesehen sein, wobei eine gruppenweise oder individuelle Ansteuerung der Belüftungsdüsen 14 vorteilhaft sein kann, um gewisse Bereiche des Förderkanals 12 nicht zu bedüsen. Auf diese Weise können besonders ruhige Strömungsverhältnisse zwischen den Lamellen dort eingestellt werden, wo dieses gewünscht ist.

Abweichend von dem dargestellten Ausführungsbeispiel können die Belüftungsdüsen nicht nur von unten, sondern beispielsweise auch seitlich in den Förderkanal 11 eindüsen oder, wenn kein Förderkanal 11 vorgesehen ist, in die entsprechende Zone des Behältertiefsten.

Zwischen dem Förderkanal 11 und den Lamellen 7 ist ein Verteiler 15 für die aufsteigenden Gasbläschen und Verunreinigungen vorgesehen. Der Verteiler 15 soll einerseits zu einer Vergleichmäßigung der aufsteigenden Stoffe über den Behälterquerschnitt sorgen und andererseits die Aufstiegsgeschwindigkeit dieser Stoffe bremsen, um so zwischen den Lamellen 7 möglichst ruhige Strömungsverhältnisse einzustellen.

Der Verteiler 15 besteht aus einer Vielzahl von einzelnen Streben 16, die in zwei Ebenen übereinander angeordnet sind, wobei jede Ebene durch eine Vielzahl von Streben 16 gebildet wird, die im Abstand voneinander angeordnet sind. Innerhalb der beiden Ebenen haben die Streben 16 jeweils den gleichen Abstand voneinander. Die beiden Ebenen jedoch sind versetzt zueinander angeordnet, so daß sich insgesamt S-förmig gewundene Durchlässe für die aufsteigenden Stoffe durch den Verteiler 15 ergeben.

Die Streben 16 einer der beiden Ebenen des Verteilers 15 können vorteilhaft höhenverstellbar gelagert sein, so daß insgesamt die eine Ebene zu der anderen Ebene des Verteilers 15 angenähert oder von dieser anderen Ebene entfernt werden kann. Auf diese Weise können die freien Strömungsquerschnitte zwischen den Streben 16 des Verteilers 15 vergrößert oder verringert werden, um die strömungsbremsende Wirkung des Verteilers 15 zu beeinflussen, beispielsweise in Anpassung an die Größe der eingedüsten Luftbläschen.

Im dargestellten Ausführungsbeispiel sind die Streben 16 mit einem runden Querschnitt dargestellt. Vorteilhaft ist eine gebogene oder dachartig abgewinkelte oder schrägstehend verlaufende Oberseite der Streben 16, damit Sinkstoffe, die aus den Lamellen 7 zum Behältertiefsten absinken, sich in möglichst geringem Maße auf den Streben 16 ablagern können. Durch die beschriebene Ausbildung der Oberseite der Streben 16 wird die konstruktiv vorgesehene Wirkung des Verteilers 15 optimal erhalten, ohne durch Ablagerungen beeinflußt zu werden.

Teilweise gereinigtes Wasser kann durch eine Rückleitung 17 am Ende des Behälters 6 entnommen werden und mit Hilfe einer Pumpe 18 über eine Steigleitung 19 in ein Einspeiserohr 20 gefördert werden kann. Sowohl in der Steigleitung 19 als auch im Einspeiserohr 20 sind Anschlüsse 21 vorgesehen, wobei durch die Anschlüsse 21 Gase in das Wasser eingeleitet werden können und/oder Chemikalien, beispielsweise Flockungsmittel. Vom Einspeiserohr 20 gelangt das so behandelte Wasser wiederum in den Behälter 6, dadurch daß ein Teil der Wassermenge im Kreislauf geführt und zusätzlich behandelt werden kann, kann die Reinigungswirkung der gesamten Anlage und insbesondere der Reinigungseinrichtung 5 erhöht werden.

## Patentansprüche

1. Reinigungseinrichtung für Sand, mit einem Behälter, der einen Zulauf für eine Wasser/Sand-Suspension aufweist, sowie einen ReinwasserAblauf, sowie mit in dem Behälter angeordneten Lamellen, die wellenartig konvexe und konkave Bereiche aufweisen, sowie mit einer Förderschnecke im Behältertiefsten, gekennzeichnet durch einen Verteiler (15) für aus dem Behältertiefsten aufsteigende Schwebstoffe, wobei der Verteiler (15) eine Vielzahl von Durchlässen für die Schwebstoffe aufweist und zwischen der Förderschnecke (12) und den Lamellen (7) angeordnet ist.

2. Einrichtung nach Anspruch 1, dadurch gekennzeichnet, daß die Größe der Durchlässe einstellbar ist.

3. Einrichtung nach Anspruch 2, gekennzeichnet durch in zwei oder mehreren Ebenen übereinander angeordnete Reihen von Streben (16), wobei die Streben (16) jeder Ebene im Abstand voneinander angeordnet sind und wobei die Streben (16) benachbarter Ebenen versetzt zueinander angeordnet sind und wobei die Streben (16) wenigstens einer Reihe in der Höhe einstellbar gelagert sind.

4. Einrichtung nach einem der Ansprüche 1 bis 3, dadurch gekennzeichnet, daß die Oberseite der Streben (16) kuppenförmig oder dachförmig ausgebildet ist.

5. Reinigungseinrichtung nach einem der vorhergehenden Ansprüche, dadurch gekennzeichnet, daß für die Einleitung von Gas in die Sinkstoffe Belüftungsdüsen (14) im Bereich der Förderschnecke (12) angeordnet sind.

6. Einrichtung nach Anspruch 5, dadurch gekennzeichnet, daß die Belüftungsdüsen (14) in einen Förderkanal (11) münden, in dem die Förderschnecke (12) angeordnet ist.

7. Einrichtung nach einem der vorhergehenden Ansprüche, dadurch gekennzeichnet, daß die Lamellen (7) sich in der Richtung des Wasserstroms vom Zulauf zum Ablauf erstrecken und sich über im wesentlichen die gesamte Distanz im Behälter (6) zwischen Zulauf und Ablauf erstrekken.

8. Einrichtung nach Anspruch 7, dadurch gekennzeichnet, daß die Lamellen (7) im wesentlichen senkrecht angeordnet sind, wobei die konvexen bzw. konkaven Bereiche horizontal verlaufen.

9. Einrichtung nach Anspruch 7, dadurch gekennzeichnet, daß über die Behälterlänge mehrere Lamellenpakete mit unterschiedlicher Neigung oder unterschiedlich verlaufenden konvexen und konkaven Bereichen hintereinander angeordnet sind.
